# EUROPEAN PATENT APPLICATION

(11) **EP 1 510 928 A2**
(43) Date of publication of application: **02.03.2005**
(21) Application number: 04255141.6
(22) Date of filing: 26.08.2004
(51) Int. Cl.: G06F 13/38

(54) **Electronic device and method of controlling interface thereof**

(30) Priority: 27.08.2003 JP 2003303543
(71) Applicant: CANON KABUSHIKI KAISHA, Ohta-ku, Tokyo (JP)
(72) Inventor: Hosokawa, Shuichi, Canon Kabushiki Kaisha, Ohta-ku, Tokyo (JP)
(74) Representative: Beresford, Keith Denis Lewis

(57) **Abstract**

In an electronic device having a USB controller capable of transferring data in a High-Speed mode for transferring data at a first transfer rate and in a Full-Speed mode for transferring data at a rate lower than the first transfer rate, whether the connection mode is the High-Speed mode or the Full-Speed mode is acquired when a USB cable is connected. The first or second configuration conforming to the acquired mode is selected, the USB controller is controlled based upon the selected first or second configuration, and processing for transferring data to a connected external device is executed. This makes it possible to execute data transfer processing that is suited to the connection mode.

## Description

### FIELD OF THE INVENTION

This invention relates to an electronic device having a communication interface that is compliant with the USB 2.0 standard or a standard similar thereto, and to a method of controlling the interface of this electronic device.

### BACKGROUND OF THE INVENTION

USB (Universal Serial Bus) standards (USB 1.1 (see *"Universal Serial Bus Specification Revision 1.1, September 23, 1998")* and USB 2.0 (see *"Universal Serial Bus Specification Revision 2.0, April 27,* 2000")) relate to communication interfaces between personal computers and peripherals.

A video class interface (see *"Universal Serial Bus Device Class Definition for Video Devices",* Revision 1.0 RC4, June 26), which is one device class, is currently being proposed. In accordance with a digital video camera that is in conformity with a video class interface, image data that has been captured by an image sensor or image data that has been read out of a storage medium can be streamed to a personal computer. Examples of formats defined by a video class interface include MJPEG (Motion-JPEG), DV (Digital Video) and MPEG (Moving Picture Experts Group), etc.

In a case where the MJPEG format is selected as a sub-type (a USB term that refers to a moving-picture transfer format in a video class interface), the fact that transfer of voice is defined by the video class interface means that when streaming in which voice data has been attached to an image is streamed, it is necessary to mount an audio class interface that is separate from the video class interface. However, if the DV format or MPEG format is selected as the sub-type, it is unnecessary to separately mount an audio class interface because the sending and receiving of voice also is defined by the video class interface. Accordingly, when streaming in which voice has been attached to an image is performed, the number and types of interfaces mounted as devices differ depending upon how the sub-type of the video class interface is chosen.

Further, in a case where streaming is performed using a video class interface, either asynchronous transfer (isochronous transfer) or synchronous transfer (bulk transfer) can be used. Ordinarily, however, isochronous transfer is used because it possesses image and voice continuity and makes it easy for a personal computer to recognize the timing at which image frames change over.

Isochronous transfer is a scheme in which a fixed amount of data is always transferred at each fixed interval (referred to as a "microframe" below). When a connection is made in a Full-Speed mode (a USB term that refers to transfer at 12 Mbps, which is defined by USB 1.1), the microframe interval is 1 ms and it is possible to send and receive a maximum of 1023 bytes of isochronous data in each microframe. By contrast, when a connection is made in a High-Speed mode (a USB term that refers to transfer at 480 Mbps, which is defined by USB 2.0), the microframe interval is 123 µs and it is possible to send and receive a maximum of 3072 bytes of isochronous data in each microframe.

Owing to the difference in band that results from such connections, the streamable frame rate, image size and image format in the High-Speed mode differ from those in the Full-Speed mode. Further, in order to connect in the High-Speed mode, it is necessary that certain conditions be satisfied, e.g., the personal computer serving as the host is required to support the High-Speed mode or the entire route of the connection is required to support the High-Speed mode. Thus, the mode of the connection is the High-Speed mode or the Full-Speed mode and differs from use to user.

For these reasons, when it is attempted to make a USB connection and perform streaming or the like with a fixed configuration irrespective of the mode of the connection as in the prior art, it is not always possible to provide a service that conforms to the user environment. For example, with a configuration that has been made to conform to a connection in the High-Speed mode, a user who can only connect in the Full-Speed mode cannot receive service. On the other hand, with a configuration that has been made to conform to a connection in the Full-Speed mode, a user cannot receive an ideal service that exploits the band of the High-Speed mode even though connection in the High-Speed mode is possible.

### SUMMARY OF THE INVENTION

Accordingly, a concern of the present invention is to provide an electronic device that is capable of acquiring a connection mode when a USB cable is connected, selecting a first or a second configuration that conforms to the connection mode acquired and executing data transfer processing based the first or second configuration, as well as a method of controlling the interface of this device.

According to an aspect of the present invention, it is provided an electronic device capable of sending and receiving data to and from an external device via a USB, comprising: a USB controller capable of transferring data in a first connection mode in which data transfer based upon a first transfer rate is performed and in a second connection mode in which data transfer is performed at a rate lower than the first transfer rate; connection mode acquisition means for acquiring whether the first connection mode or the second connection mode is in effect at the time of connection of a USB cable; and control means for selecting a first or second configuration that is in accordance with the connection mode acquired by the connection mode acquisition means, controlling the USB controller based upon the first or second configuration selected, and executing data transfer processing; wherein the first configuration includes at least one interface for the first connection mode and the second configuration includes at least one interface for the second connection mode.

According to another aspect of the present invention, it is provided a method of controlling an interface in an electronic device capable of sending and receiving data to and from an external device via a USB, comprising: a first data transfer step of transferring data in a first connection mode in which data transfer based upon a first transfer rate is performed; a second data transfer step of transferring data in a second connection mode in which data transfer is performed at a rate lower than the first transfer rate; a connection mode acquisition step of acquiring whether the first connection mode or the second connection mode is in effect at the time of connection of a USB cable; and a control step of selecting a first or second configuration that is in accordance with the connection mode acquired at the connection mode acquisition step, controlling the USB controller based upon the first or second configuration selected, and executing data transfer processing; wherein the first configuration includes at least one interface for the first connection mode and the second configuration includes at least one interface for the second connection mode.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate an embodiment of the invention and, together with the description, serve to explain the principles of the invention.
Fig. 1 is a conceptual view in which a digital video camera and a personal computer are connected according to first to third embodiments of the present invention;
Fig. 2 is a block diagram illustrating the structure of a digital video camera according to the first embodiment;
Fig. 3 is a diagram for describing mounted class, subclass, transfer format and end points of the digital video camera according to the first embodiment;
Fig. 4 is a flowchart for describing an operation relating to streaming and card access in the digital video camera according to the first embodiment;
Fig. 5 is a diagram useful in describing an MJPEG/PCM management method in the first embodiment;
Fig. 6 is a diagram for describing mounted class, subclass, transfer format and end points of the digital video camera according to the second embodiment;
Fig. 7 is a diagram useful in describing MJPEG/PCM status in the second embodiment;
Fig. 8 is a flowchart for describing an operation relating to streaming and card access in the digital video camera according to the second and third embodiments;
Figs. 9A and 9B are diagrams useful in describing transfer of a still image and video stream in the third embodiment;
Fig. 10 is a diagram for describing mounted class, subclass, transfer format and end points of the digital video camera according to the third embodiment; and
Fig. 11 is a flowchart for describing still-image transfer processing in the digital video camera according to the third embodiment.

### DETAILED DESCRIPTION OF THE PREFERRED EMBODIMENTS

Preferred embodiments of the present invention will now be described in detail with reference to the accompanying drawings.

### [First Embodiment]

A digital video camera according the first embodiment is a multifunction device having a function for performing streaming playback by transferring an input image from a CCD and input voice from a microphone to a personal computer, and a function for transferring an image file, which has been stored on a randomly accessible storage medium (e.g., a memory card), to a personal computer.

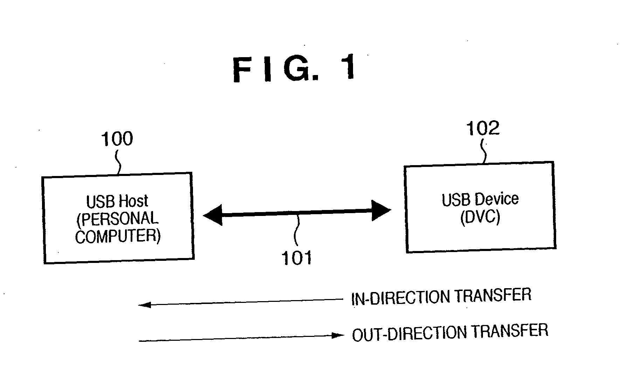

Fig. 1 is a block diagram showing the configuration of a system in which a personal computer and a digital video camera are connected according to the first embodiment.

In Fig. 1, a personal computer 100 functions as a USB host that can be connected to a USB cable 101. A digital video camera (DVC) 102 is a USB device having a USB port. The personal computer 100 and the digital video camera 102 are connected directly by the USB cable 101. In this system, a moving picture in the process of being shot by the digital video camera 102 and voice are transferred to the personal computer 100 as data for streaming playback. Further, an image file that has been stored on a memory card of the digital video camera 102 is transferred to the personal computer 100.

As for the directions of data transfer, the direction from the digital video camera 102 to the personal computer 100 is referred to as the "IN direction", and the direction from the personal computer 100 to the digital video camera 102 is referred to as the "OUT direction".

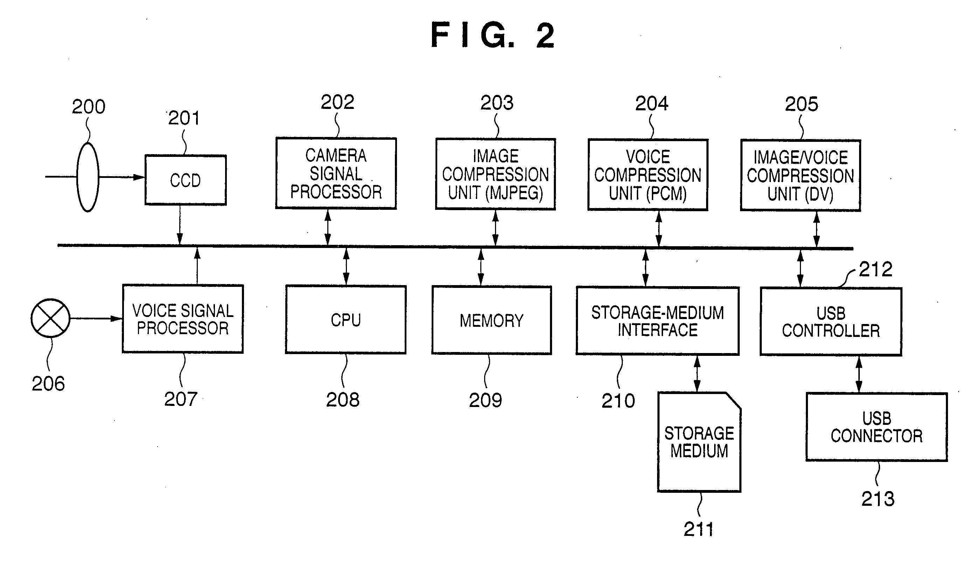

Fig. 2 is a block diagram illustrating the structure of the digital video camera 102 according to the first embodiment.

As shown in Fig. 2, light from a subject passes through a lens 200. The light from the lens 200 forms an image on an image sensor 201, which outputs an electric signal that conforms to the image formed. A camera signal processor 202 executes signal processing in such a manner that an opto-electronically converted image from the image sensor 201 will become a standard image signal. An image compression unit 203 encodes and compresses the image signal as by JPEG encoding. A voice compression unit 204 compresses a voice signal, which is generated from a microphone 206, as by PCM encoding and executes voice processing. An image/voice compression unit 205 compresses and processes the image signal and voice signal as by DV-format encoding. The microphone 206 is used to acquire voice. A voice signal processor 207 executes signal processing in such a manner that the voice signal from the microphone 206 will become a standard voice signal. A CPU 208 controls the entire operation of the digital video camera in accordance with a control program that has been stored in a memory 209. The latter is used also as a memory for accumulating image data or voice data temporarily. A storage-medium interface 210 is an interface for communicating with a removable storage medium 211. The latter is a memory card, by way of example. Also illustrated are a USB controller 212 and a connector 213 for removable insertion of a USB cable.

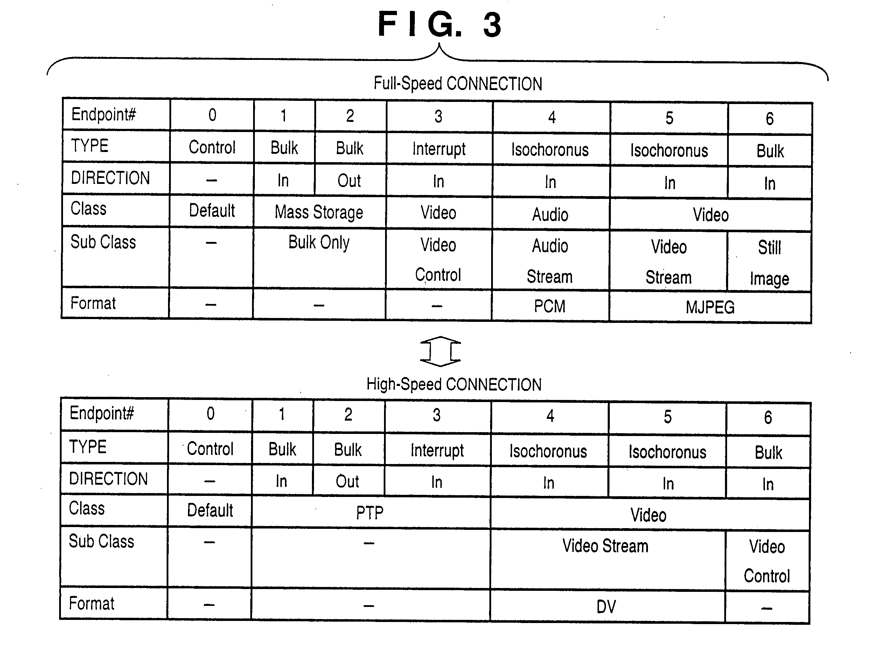

Fig. 3 is a diagram useful in describing mounted class in the digital video camera 102 according to the first embodiment.

As shown in Fig. 3, mounted classes in the digital video camera 102, which is a USB multifunction device, include the following:
A. In case of the High-Speed mode:
   · Video class interface (Video)
      [Stream (Video Stream): DV format (DV) /Control (Video Control)]
   · Still image class (PTP: Picture Transfer Protocol) interface
B. In case of the Full-Speed mode:
   · Video class interface (Video)
      [Stream (Video Stream): MJPEG format (MJPEG) / control]
   · Audio class interface (Audio)
      [Stream (Audio Stream): PCM format (PCM) /control]
   · Mass-storage class interface (Mass Storage)

The USB controller 212 has seven end points for communication (transfer FIFOs in USB terminology) and a function for changing the transfer direction and transfer type [Bulk (asynchronous) / Interrupt (transfer interrupt) / Isochronous (synchronous transfer)] with respect to end points 1 to 6. Further, the USB controller 212 supports the High-Speed and Full-Speed modes, senses the mode of connection between personal computer 100 (host) ↔ digital video camera 102 (device) at the time of connection and supplies this information to the CPU 208, whereby it is possible to adopt an end-point structure of the kind shown in Fig. 3. Isochronous transfer (Isochronous) is a mode in which transfer is performed while assigning n-byte transfer time frame by frame, interrupt transfer (Interrupt) is a mode in which the host polls the device periodically and performs a data transfer if there is data to be transferred, and bulk transfer (Bulk) is a mode of lowest priority in which data can be transferred even frame by frame if the bus schedule has an opening.

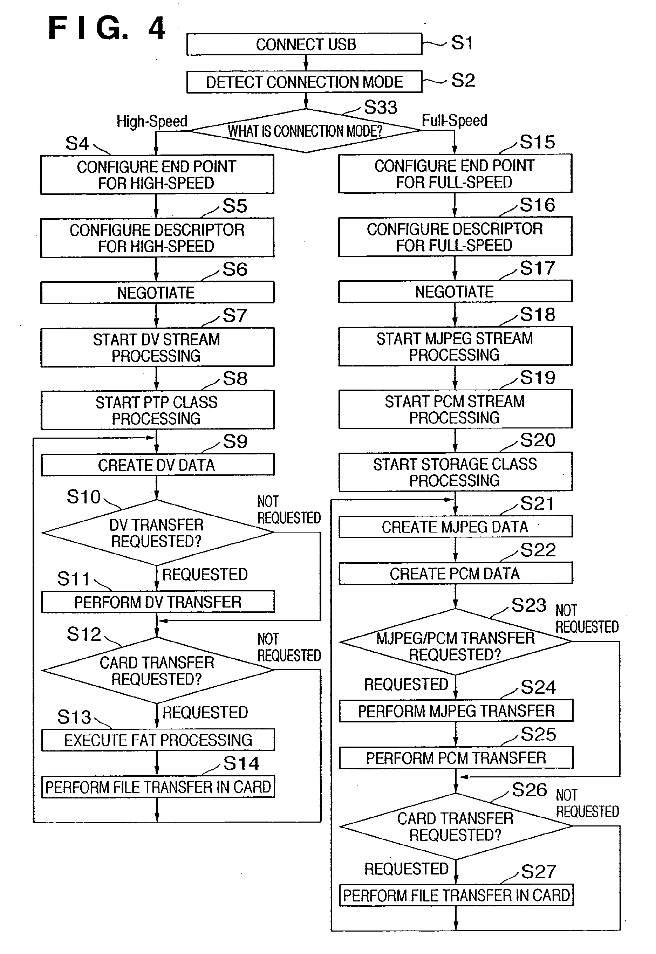

Fig. 4 is a flowchart for describing the flow of processing in the High-Speed and Full-Speed modes. Operation will be described while referring to the block diagram of Fig. 2 and the flowchart of Fig. 4. Further, at start-up, a program that has been compressed and stored in a flash memory (not shown) is decompressed and expanded in memory 209. It will be assumed that the CPU 208 operates in accordance with the program stored in memory 209.

First, at step S1 in Fig. 4, the USB cable 101 is inserted into the USB connector 213, whereupon control proceeds to step S2. Here the USB controller 212 senses that the cable 101 has been inserted and notifies the CPU 208 of the fact that the cable has inserted. In response, the CPU 208 performs initialization necessary for operation of end point 0 of USB controller 212 and, at the completion of initialization, controls the USB controller 212 and performs pull-up for connection in the High-Speed mode.

As a result, upon receiving pull-up from the digital video camera 102, which is the USB device, the personal computer 100 serving as the USB host enters into negotiation with the digital video camera 102. If the entire route 101 of the connection from the USB host 100 to the USB device 102 supports the High-Speed mode at this time, then the connection is made in the High-Speed mode; otherwise, the connection is made in the Full-Speed mode.

Next, control proceeds to step S3, at which the USB controller 212 that has sensed the mode of the connection notifies the CPU 208 of the connection mode. Upon being so notified, the CPU 208 performs initialization in the form shown in Fig. 3 with respect to end points 1 to 6 of the USB controller 212 at step S4 or S15 in Fig. 4.

Next, at step S5 or S16, the CPU 208 creates descriptor information (a USB term that refers to information that indicates the function of a USB device and the mounted class/subclass protocol, etc.), which has been made to conform to the connection mode shown in Fig. 3, in the memory 209, performs transfer in response to a standard request at the time of negotiation (a USB term that refers to exchange of descriptor information, etc., by an initialization operation performed in standard fashion in all USB devices) of the personal computer 100, and ends negotiation at step S6 or S17.

The negotiation method and the content of created descriptors are defined by the following specifications and need not be described here:
·"Universal Serial Bus Specification 2.00";
·"Universal Serial Bus Device Class Definition for Video Devices";
·"Universal Serial Bus Device Class Definition for Video Devices: Motion-JPEG Payload";
·"Universal Serial Bus Device Class Definition for Video Devices: DV Payload";
·"Universal Serial Bus Device Class Definition for Audio Devices";
·"Universal Serial Bus Mass Storage Class Specification Overview"; and
·"Universal Serial Bus Still Image Capture Device Definition".

The High-Speed mode will be described first.

As shown in Fig. 3, the video class interface used in streaming playback employs the DV format in the High-Speed mode. The still image class (PTP) interface is used in card access. The necessary processing, therefore, is started up at steps S7 and S8 in Fig. 4.

The video class interface used in streaming playback will be described next.

At step S9, the image of a subject obtained by the lens 200 is opto-electronically converted by the image sensor 201 and the resultant electric signal is input to the camera signal processor 202. The latter converts the opto-electronically converted image to a standard image signal and stores the image temporarily in the memory 209.

On the other hand, the voice signal obtained from the microphone 206 is converted to a standard voice signal by the voice signal processor 207 and is stored temporarily in the memory 209 in an area different from that which stores the standard image signal. Next, the image/voice compression (DV) unit 205 subjects the standard image signal and voice signal, which have been stored temporarily, to compressing encoding for the DV format and stores the result of compression temporarily in the memory 209 in an area different from those mentioned earlier.

At the start of streaming playback, the personal computer 100 issues a Set Interface command to the digital video camera 102, after which it issues an IN token (a USB term that refers to a data-transfer instruction from the USB host in the digital video camera 102 → USB host 100 direction) at step S10 in Fig. 4. As a result, the CPU 208 of the digital video camera 102 receives the IN token from the USB controller 212, whereupon the CPU 208 transfers DV format data of a size agreed upon at the time of negotiation from the memory 209 to the USB controller 212 at step S11 upon attaching a prescribed header to the data in memory 209.

In this embodiment, the DV format data is transferred using isochronous transfer. Since transfer control and the header are defined in "Universal Serial Bus Specification 2.0", they are not described here. By repeating such processing, streaming in the DV format in the High-Speed mode is implemented by a video class interface.

Accessing of the card serving as storage medium 211 will be described next.

At step S12, the personal computer 100 requests the digital video camera 102 to perform image read/write in storage medium 211 in file units. The CPU 208 controls the USB controller 212, accepts the request from the personal computer 100, expands it in the memory 209 and determines the nature of the request. If the nature of the request is a request for transfer of an object (file) from the digital video camera 102 to the personal computer 100, then the CPU 208 controls the storage-medium interface 210, expands FAT (Fat Allocation Table) information of the storage medium 211 in memory 209 and expands the content of a sector, which relates to the file of the transfer request, in memory 209 based upon the FAT information. After the sector content is thus expanded, control proceeds to step S14 if the IN token is issued from the personal computer 100. In accordance with the size of the still image class interface agreed upon at the time of negotiation, the CPU 208 delivers the sector content in memory 209 to the USB controller 212 and controls the USB controller 212 to thereby send a transfer packet to the cable 101. By repeating this successively, the personal computer 100 acquires the file, etc., from the storage medium 211.

The Full-Speed mode will be described next.

The video class interface used in streaming playback employs the MJPEG format, and the audio class interface employs the PCM format. Further, the mass storage class employed in card access employs bulk only (a USB storage class interface term referring to a file transfer scheme that uses only synchronous transfer). The necessary processing, therefore, is started up at steps S18, S19 and S20 in Fig. 4.

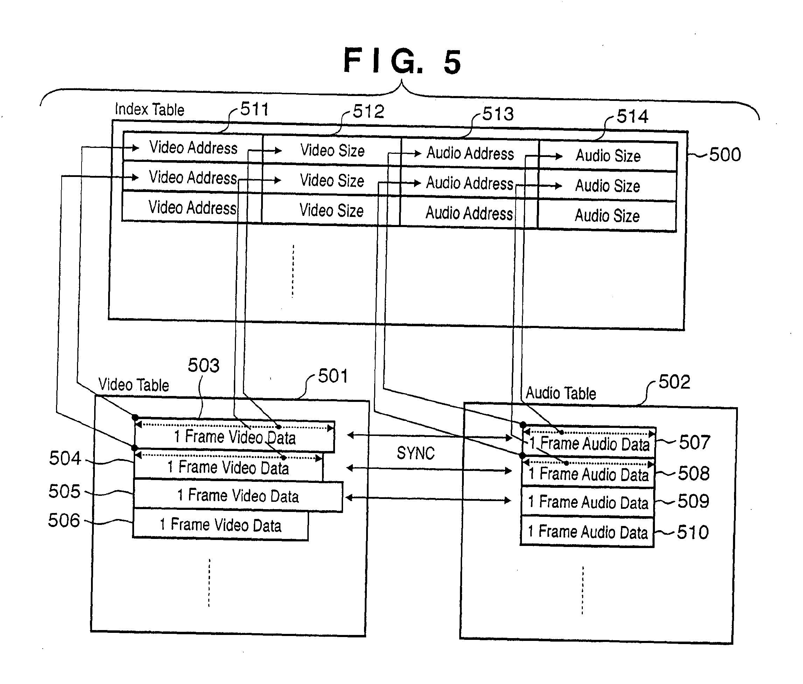

First, the video class interface and audio class interface used in streaming playback will be described with reference to the flowchart of Fig. 4 and a conceptual view of an MJPEG/PCM management table in Fig. 5.

Fig. 5 is a diagram useful in describing an MJPEG/PCM management method in the digital video camera 102 of the first embodiment.

Shown in Fig. 5 are an MJPEG and PCM index table 500 in frame units, an MJPEG data table 501, a PCM data table 502, single frames of MJPEG video data 503 to 506 and single frames of PCM audio data 507 to 510. A video address 511 indicates the leading address of the MJPEG data 503, a video address 512 indicates the data address of the MJPEG data 503, and an audio address 513 indicates the leading address of the PCM data 507. Audio size 514 indicates the data size of the PCM data 507. The items of video data and audio data have their data addresses and data sizes managed in similar fashion by the data tables 501 and 502, respectively. Further, it is assumed that the items of video data 503, 504, 505, 506 and the items of audio data 507, 508, 509, 510, respectively, are synchronized.

Next, at step S21 in Fig. 4, the image of a subject obtained by the lens 200 is opto-electronically converted by the image sensor 201 and the resultant electric signal is input to the camera signal processor 202. The latter converts the opto-electronically converted image to a standard image signal and stores the image temporarily in the memory 209. The image compression unit (MJPEG) 203 subjects the standard video data, which has been stored temporarily in the memory 209, to compressing encoding for MJPEG and stores the result of compression temporarily in the memory 209 in an area (501 in Fig. 5) different from that of the above-mentioned standard image. When this MJPEG data is stored temporarily, index information indicated at 500 in Fig. 5 is created in memory 209 based upon the leading address (511 in Fig. 5) and frame data size (512 in Fig. 5) in order to facilitate management.

Next, control proceeds to step S22, at which the voice signal obtained from the microphone 206 is converted to a standard voice signal by the voice signal processor 207 and is stored temporarily in memory 209 in an area different from that of the video data. The voice compression unit (PCM) 204 subjects the standard voice signal, which has been stored temporarily in memory 209, to voice compressing encoding for PCM and stores the result of compression temporarily in the memory 209 in an area (502 in Fig. 5) different from the above-mentioned image area and different from that of the standard voice data. Similarly, at this time index information indicated at 500 in Fig. 5 is created in memory 209 based upon the leading address (513 in Fig. 5) and size (514 in Fig. 5) every frame of the MJPEG video data.

It is so arranged that when the index information is created, the synchronization relationship of the video data and voice data will be understood, as indicated at 500 in Fig. 5. According to this embodiment, the index data is created with those items of video and audio data that are synchronized to each other being arranged collectively, as indicated by video data 503, 504, 505, 506 and voice data 507, 508, 509, 510, respectively, in order that the video data and voice data will be demarcated at the same single-frame intervals.

Next, at step S22 in Fig. 4, at the start of streaming playback, the personal computer 100 issues the Set Interface command to the digital video camera 102, after which it issues the IN token at step S23, thereby requesting start of transfer of the MJPEG/PCM data.

As a result, the CPU 208 of the digital video camera 102 receives the IN token from the USB controller 212, whereupon the CPU 208 extracts synchronized video data and audio data from the index information 500. Then, at step S24, the processing started at step S18 for managing the video class interface transfers the data based upon the video data of the size agreed upon at the time of negotiation. Control then proceeds to step S25, at which processing started at step S19 for managing the audio class interface transfers the data based upon the voice data of the size agreed upon at the time of negotiation.

In this embodiment, the video data and audio data is transferred using isochronous transfer. Since transfer control is defined in "Universal Serial Bus Specification 2.0", it is not described here.

By repeating the above processing, streaming of MJPEG data and PCM data in the Full-Speed mode is implemented by a video class interface and audio class interface.

Card access will be described next.

The personal computer 100 acquires FAT information of the storage medium 211 with which the digital video camera 102 is equipped. Upon acquiring the FAT information, the personal computer 100 requests the digital video camera 102 to perform image read/write in storage medium 211 in sector units based upon the FAT information acquired. Upon controlling the USB controller 212 and accepting the request from the personal computer 100, the CPU 208 expands the request in the memory 209 and determines the nature of the request. If the nature of the request is a request for transfer from the digital video camera 102 to the personal computer 100, then the CPU 208 controls the storage-medium interface 210 and expands the sector content of the request in memory 209. After the sector content is thus expanded in memory 209 and the IN token is received, the CPU 208 delivers the sector content of memory 209 to the USB controller 212 in accordance with the packet size of the storage class interface agreed upon at the time of negotiation and controls the USB controller 212 to thereby send a transfer packet to the cable 101 (step S27). By repeating this successively, the personal computer 100 can acquire the file, etc., from the storage medium 211.

In the first embodiment, a scheme in which the streaming playback function and the card-access function are selected in accordance with the connection mode is illustrated. However, a function for changing this scheme is not limited to streaming playback and card-access functions.

Further, it is assumed that the formats used in a video class interface employed in the streaming playback function are MJPEG and DV, that the format used in an audio class interface is PCM, and that the classes used in card access are a PTP class interface and a mass-storage class interface. However, this does not impose a limitation upon the present invention.

Further, the input of data for streaming transfer is not limited to input from a CCD and microphone.

### [Second Embodiment]

It is described in the first embodiment that class and the format of transferred data are changed in accordance with the connection mode. In a second embodiment, a case where the size of a transferred image and the frame rate are changed rather than the class and format of transferred data. The hardware implementation of the second embodiment is the same as that of the first embodiment, the connection between the host and device is similar to that of Fig. 1, the structure of the camera is the same as that shown in Fig. 2, and the management of MJPEG data and PCM data is the same as that shown in Fig. 5.

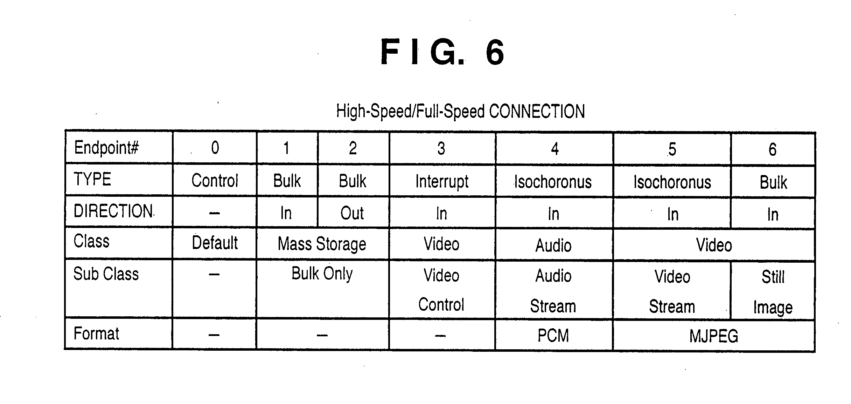

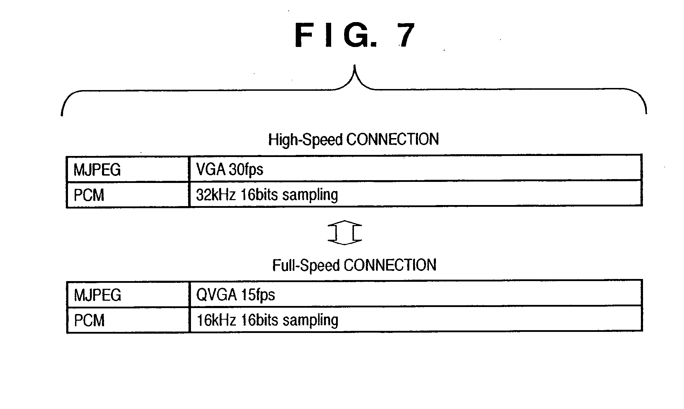

Fig. 6 is a diagram illustrating mounted classes and end points of the digital video camera 102 according to the second embodiment. Mounted classes include the following:
A. In case of the High-Speed mode:
   · Video class interface (Video)
      (Stream: MJPEG format / Control)
   · Audio class interface (Audio)
      (Stream: PCM format / Control)
   · Mass-storage class interface (Mass Storage)
B. In case of the Full-Speed mode:
   · Video class interface
      (Stream: MJPEG format / Control)
   · Audio class interface
      (Stream: PCM format / Control)
   · Mass-storage class interface
   The frame rates and sizes of the MJPEG images data in each connection mode and the sampling of PCM voice are as shown in Fig. 7.
   In case of the High-Speed mode in Fig. 7, the size and frame rate with MJPEG are VGA and 30 frames per second, respectively, and sampling in PCM is 16 bits at 32 kHz. In case of the Full-Speed mode, the size and frame rate with MJPEG are QVGA and 15 frames per second, respectively, and sampling in PCM is 16 bits at 16 kHz.

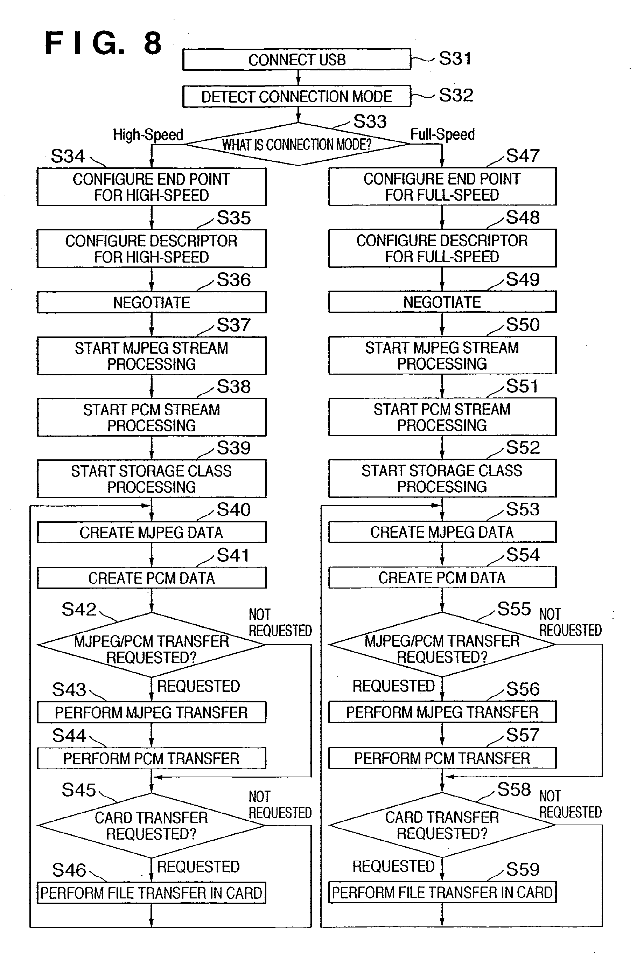

   Fig. 8 is a flowchart for describing processing in the High-Speed and Full-Speed modes in the digital video camera 102 according to the second embodiment. Operation will be described with reference the block diagram of Fig. 2 and the flowchart of Fig. 8.
   First, at step S31 in Fig. 8, the USB cable 101 is inserted into the USB connector 213, whereupon the USB controller 212 senses that the cable 101 has been inserted and notifies the CPU 208 of the fact that the cable has inserted. In response, the CPU 208 performs initialization necessary for operation of end point 0 of USB controller 212 and, at the completion of initialization, controls the USB controller 212 and performs pull-up for connection in the High-Speed mode.
   Next, control proceeds to step S32. Here, upon receiving pull-up from the digital video camera 102, the personal computer 100 enters into negotiation with the digital video camera 102. If the entire route 101 of the connection from the personal computer 100 to the camera 102 supports the High-Speed mode at this time, then the connection is made in the High-Speed mode; otherwise, the connection is made in the Full-Speed mode.
   Next, control proceeds to step S33, at which the USB controller 212 that has sensed the mode of the connection notifies the CPU 208 of the connection mode. Upon being so notified, the CPU 208 performs initialization in the form shown in Fig. 6 with respect to end points 1 to 6 of the USB controller 212 at step S34 or S47 in Fig. 8.
   Next, at step S35 or S48, the CPU 208 creates descriptor information, which has been made to conform to the connection mode shown in Fig. 6, in a memory (not shown), and performs transfer in accordance with a standard request at the time of negotiation with the personal computer 100. The prescribed negotiation is terminated at steps S36, S49, and processing relating to the interfaces is started, namely processing relating to the video class interface required for streaming at steps S37 and S50, the audio class interface at steps S38 and S51, and the mass-storage class interface required for card access at steps S39 and S52.
   The formats of video and audio data in each of the connection modes are as shown in Fig. 7. The descriptors in negotiation in this embodiment are defined by the following specifications and need not be described here:
   ·"Universal Serial Bus Specification 2.00";
   ·"Universal Serial Bus Device Class Definition for Video Devices";
   ·"Universal Serial Bus Device Class Definition for Video Devices: Motion-JPEG Payload";
   ·"Universal Serial Bus Device Class Definition for Audio Devices"; and
   ·"Universal Serial Bus Mass Storage Class Specification Overview".
   It is so arranged that set values of "bBitResolution" and "bSamFreq" in "Type I Format Descriptor" and set values of "wWidth", "wHeight" and "bFrameIntervalType" in "Video Frame Descriptor" match the content shown in Fig. 7.
   At steps S40 and S53, the image of a subject obtained by the lens 200 is opto-electronically converted by the image sensor 201 and the resultant electric signal is input to the camera signal processor 202. The latter converts the opto-electronically converted electric signal to a standard image signal and stores the image temporarily in the memory 209. The image compression unit (MJPEG) 203 subjects the standard image data that has thus been stored temporarily in the memory 209 to image compressing encoding for MJPEG and stores the result of compression temporarily in the memory 209 in an area different from that of the above-mentioned standard image. In the High-Speed mode at step S40, the image that undergoes compression and storage is 30 frames per second of VGA size, as indicated in Fig. 6. On the other hand, in the case of the Full-Speed mode, the size and frame rate are QVGA and 15 frames per second, respectively, at step S53.
   Next, at steps S41 and S54, the voice signal obtained from the microphone 206 is converted to a standard voice signal by the voice signal processor 207 and is stored temporarily in the memory 209 in an area different from that which stores the video data. The voice compression unit (PCM) 204 subjects the standard voice signal, which has been stored temporarily in memory 209, to voice compressing encoding for PCM and stores the result of compression temporarily in the memory 209 in an area different from the video data area and in an area different from that of the standard voice data. At step S41, the data that undergoes voice compression and storage in the High-Speed mode is 32-bit sampling. At step S54, which is for the Full-Speed mode, the data is 16-bit sampling.
   The processing indicated at steps S42 to S46 and steps S55 to S59 is executed by a technique similar to that of the processing of steps S23 to S27, respectively, in the first embodiment, whereby video data of a size and rate and voice data of a sampling frequency made to conform to the connection mode can be transmitted by a video class interface and audio class interface.

### [Third Embodiment]

In the first and second embodiments, an example corresponding to a connection mode is described in relation to streaming and file access. A third embodiment will be described in regard to a case where processing relating to at least one data transfer among classes in which two or more types of data transfer is performed is changed over in accordance with the connection mode. Specifically, a still image (a USB video class interface term that refers to a still image in remote capture) in a video class interface will be described as an example.

A video class interface is such that transfer of Still Image (still picture) data captured by a capture command from the host 100 includes two types of transfer of Video Stream (moving-picture) data for transferring streaming data.

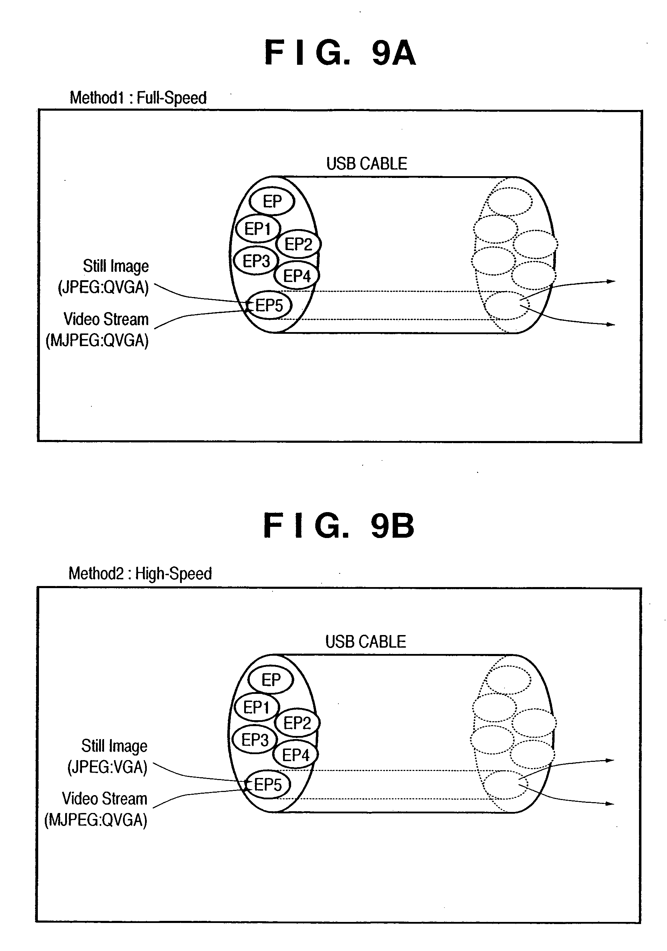

In the third embodiment, Method 2 illustrated in Fig. 9B is used in the High-Speed mode and Method 1 illustrated in Fig. 9A is used in the Full-Speed mode.

Methods 1 and 2 transfer both still images and video streams at the same end point (end point 5 in Fig. 5). However, with Method 1 in Fig. 9A, the image size of the still image and the image size of the video stream are the same. On the other hand, with Method 2 in Fig. 9B, the image sizes of the still image and video stream differ. The details of the above are described in "Universal Serial Bus Device Class Definition for Video Devices" and need not be described here.

The hardware implementation of the third embodiment is the same as that of the first embodiment, the connection between the host 100 and device 102 is similar to that of Fig. 1, the structure of the camera is the same as that shown in Fig. 2, and the management of MJPEG data and PCM data is the same as that shown in Fig. 5.

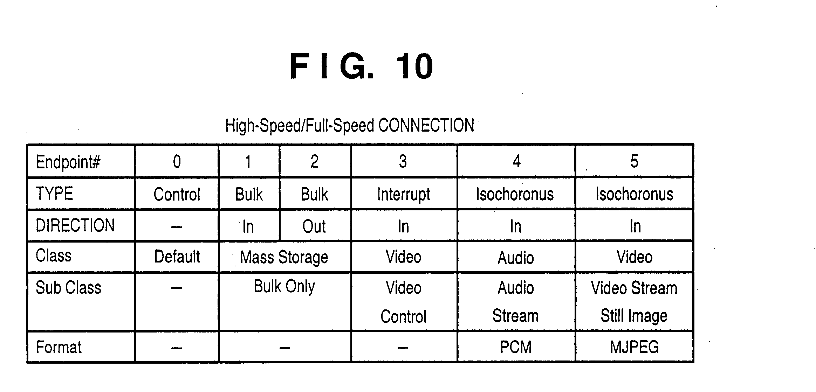

Fig. 10 is a diagram illustrating mounted classes and end points of the digital video camera 102 according to the third embodiment.
A. In case of the High-Speed mode:
   · Video class interface (Video)
      (Stream: MJPEG format / Control)
   · Audio class interface (Video)
      (Stream: PCM format / Control)
   · Mass-storage class interface (Mass Storage)
B. In case of the Full-Speed mode:
   · Video class interface (Video)
      (Stream: MJPEG format / Control)
   · Audio class interface (Video)
      (Stream: PCM format / Control)
   · Mass-storage class interface

In case of streaming, the digital video camera 102 converts an input image and signal from the CCD and microphone to the MJPEG and PCM formats and transfers the result to the personal computer 100 in a manner similar to that of the second embodiment. As the details are the same as in the second embodiment, they need not be described again here.

If the personal computer 100 issues a request for still-image capture, the digital video camera 102 is requested to transfer a still image.

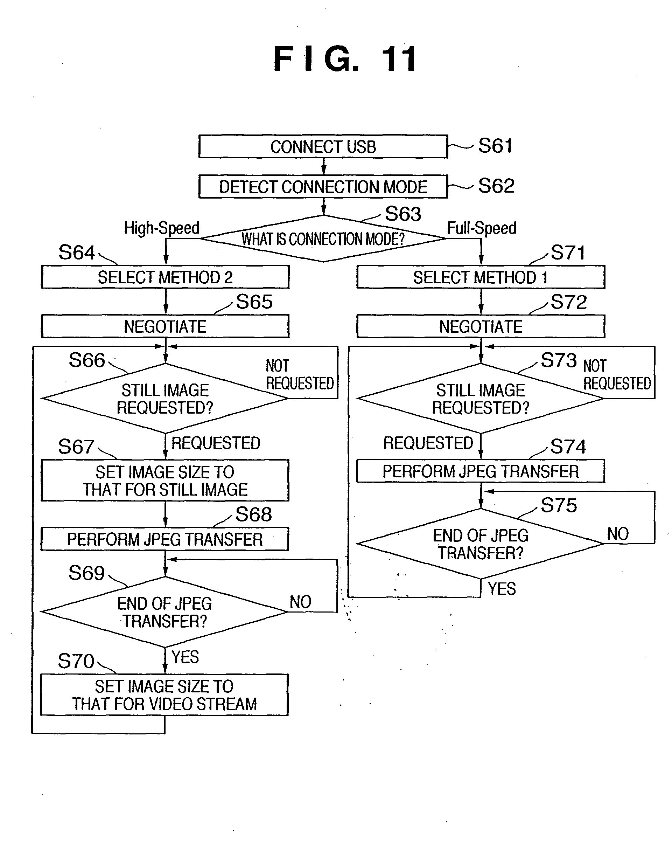

Fig. 11 is a flowchart for describing still-image transfer processing in the digital video camera 102 according to the third embodiment.

In case of the High-Speed mode, the personal computer 100 issues Set Interface, which is for changing the transfer rate, at the same time as the still-image transfer request at step S66, and performs an Alternate setting (a USB term referring to a change of band) with respect to the digital video camera 102. Next, control proceeds to step S67, at which the CPU 208 reads in data from the USB controller 212. When the still-image transfer request is received from the personal computer 100, the CPU 208 changes the acquired image size to one that conforms to the still image with regard to the camera signal processor 202 and image compression unit 203. Further, the CPU 208 changes the size of end point 5 to a size that conforms to the above-mentioned Alternate setting with regard to the USB core. When still-image data is thus created in the memory 209, control proceeds to steps S68 and S69, where the CPU 208 transfers the still-image data, which has been JPEG-encoded in the memory 209, to the USB controller 212. By repeating this, the still-image data is transferred to the personal computer 100. When reception of the still-image data is terminated, the personal computer 100 transmits Set Interface and performs Alternate setting in order to request the digital video camera 102 to resume Video Stream for the purpose of resuming streaming at step S70. When Alternate setting processing is thus completed, Video Stream is transferred again and streaming is resumed.

On the other hand, if the Full-Speed mode is discriminated at step S63, control proceeds to step S71. Here the personal computer 100 issues the still-image transfer request in a manner similar to that of the High-Speed mode. However, since the image size of Still image and the image size of Video Stream are the same, the data undergoing Video Stream transfer is transmitted as the still image as is at step S74. If transmission ends at step S75, then streaming is restored as is.

In accordance with the third embodiment, as described above, transfer of a greater amount of data that cannot be transferred in the band of the Full-Speed mode can be performed with respect to a user having a connection environment in the High-Speed mode. As a result, image data having a high frame rate can be transferred with a data format and image size of higher definition and image quality in a video class interface.

Further, even a user having only a connection environment in the Full-Speed mode can change over the configuration and can be provided with the same kind of service in a range that the band allows.

### [Other Embodiments]

As described above, the object of the invention is attained also by supplying a storage medium storing the program codes of the software for performing the functions of the foregoing embodiments to a system or an apparatus, reading the program codes with a computer (e.g., a CPU or MPU) of the system or apparatus from the storage medium, and then executing the program codes. In this case, the program codes per se read from the storage medium implement the novel functions of the embodiment and the storage medium storing the program codes constitutes the invention. Examples of storage media that can be used for supplying the program code are a floppy disk, hard disk, optical disk, magneto-optical disk, CD-ROM, CD-R, magnetic tape, non-volatile type memory card or ROM, etc.

Further, besides the case where the aforesaid functions according to the embodiments are implemented by executing the program codes read by a computer, the present invention covers a case where an operating system or the like running on the computer performs a part of or the entire process in accordance with the designation of program codes and implements the functions according to the embodiments.

Furthermore, the present invention covers a case where, after the program codes read from the storage medium are written in a function expansion board inserted into the computer or in a memory provided in a function expansion unit connected to the computer, a CPU or the like contained in the function expansion board or function expansion unit performs a part of or the entire process in accordance with the designation of program codes and implements the functions of the above embodiments.

In accordance with the first embodiment as described above, a user can exploit the band of the High-Speed mode in a High-Speed connection and, in the Full-Speed mode, can perform streaming based upon a DV format of a frame rate and image quality with an image size that cannot be transmitted in the Full-Speed mode.

Also, in card access, file access is possible in more ideal fashion via a still-image class interface in which images can be handled more conveniently than with a mass-storage class interface.

On the other hand, in a connection in the Full-Speed mode, the user can perform streaming of the same kind, though with an image size, frame rate and image quality that are inferior in comparison with the High-Speed mode, by transfer of MJPEG and PCM data.

Further, in card access, the same kind of file access is possible via the mass-storage class interface, though the handling of images is less convenient than with the still-image class interface.

Further, in accordance with the second embodiment, it is possible to carry out streaming with an image size, frame rate and image quality up to the limits of the band and device of each connection mode even with streaming transfer using the same format. As a result, a user having a connection environment in the High-Speed mode can perform more ideal streaming that exploits the band, and a user having a connection environment in the Full-Speed mode can be provided with the same kind of service in the range of the band.

In accordance with the third embodiment, streaming transfer, which is one function of a video class interface, is made the same in the High-Speed and Full-Speed modes. While this is maintained, still images of higher quality and greater size that exploit the band are transferred in the High-Speed mode and still images are transferred in a band of the same level as that of streaming transfer in the Full-Speed mode only in regard to still images, which is another function of a video class interface. As a result, still images of the same kind as that in the High-Speed mode can be obtained, though the size and image quality of transferred data are inferior.

Though the embodiments of the present invention have been described independently, the present invention can be worked by implementing the embodiments independently or in suitable combinations.

Further, though the embodiments have been described taking a digital video camera as an example, this does not impose a limitation upon the invention; it will suffice if the device is a computer device that is connectable via a USB.

As many apparently widely different embodiments of the present invention can be made without departing from the spirit and scope thereof, it is to be understood that the invention is not limited to the specific embodiments thereof except as defined in the appended claims.

## Claims

1. An electronic device capable of sending and receiving data to and from an external device via a USB, comprising:
a USB controller capable of transferring data in a first connection mode in which data transfer based upon a first transfer rate is performed and in a second connection mode in which data transfer is performed at a rate lower than the first transfer rate;
connection mode acquisition means for acquiring whether the first connection mode or the second connection mode is in effect at the time of connection of a USB cable; and
control means for selecting a first or second configuration that is in accordance with the connection mode acquired by said connection mode acquisition means, controlling said USB controller based upon the first or second configuration selected, and executing data transfer processing;
wherein the first configuration includes at least one interface for the first connection mode and the second configuration includes at least one interface for the second connection mode.

2. The device according to claim 1, wherein said control means changes an end-point structure of said USB controller in accordance with the connection mode acquired by said connection mode acquisition means.

3. The device according to claim 1, wherein number of mounted interfaces and class of the first configuration differ from number of mounted interfaces and class of the second configuration.

4. The device according to claim 3, wherein there is at least one identical class between the first and second configurations, and among subclasses, protocols and transfer-data formats in said identical class, at least one differs between the first and second configurations.

5. The device according to claim 4, wherein interfaces of said identical class include at least one for isochronous transfer.

6. The device according to claim 5, wherein said identical class is a video class interface.

7. The device according to claim 6, wherein transfer-data format when the first connection mode is in effect is a format having a rate higher than that of the transfer-data format when the second connection mode is in effect.

8. The device according to claim 6, wherein at least either one of frame rate and image size of a transferred image differs between the first and second configurations.

9. The device according to claim 3, wherein among the mounted interfaces of the first configuration and the second configuration there is at least one identical class for transferring data, said identical class has a function for transferring two types of data, and processing relating to transfer of at least one type of data of the two types of data is changed in accordance with the connection mode.

10. The device according to claim 9, wherein the processing relating to the data transfer is data transfer of a still image in a video class interface.

11. A method of controlling an interface in an electronic device capable of sending and receiving data to and from an external device via a USB, comprising:
a first data transfer step of transferring data in a first connection mode in which data transfer based upon a first transfer rate is performed;
a second data transfer step of transferring data in a second connection mode in which data transfer is performed at a rate lower than the first transfer rate;
a connection mode acquisition step of acquiring whether the first connection mode or the second connection mode is in effect at the time of connection of a USB cable; and
a control step of selecting a first or second configuration that is in accordance with the connection mode acquired at said connection mode acquisition step, controlling said USB controller based upon the first or second configuration selected, and executing data transfer processing;
wherein the first configuration includes at least one interface for the first connection mode and the second configuration includes at least one interface for the second connection mode.

12. The method according to claim 11, wherein an end-point structure of a USB controller is changed at said control step in accordance with the connection mode acquired at said connection mode acquisition step.

13. The method according to claim 11, wherein number of mounted interfaces and class of the first configuration differ from number of mounted interfaces and class of the second configuration.

14. The method according to claim 13, wherein there is at least one identical class between the first and second configurations, and among subclasses, protocols and transfer-data formats in said identical class, at least one differs between the first and second configurations.

15. The method according to claim 14, wherein interfaces of said identical class include at least one for isochronous transfer.

16. The method according to claim 15, wherein said identical class is a video class interface.

17. The method according to claim 16, wherein transfer-data format when the first connection mode is in effect is a format having a rate higher than that of the transfer-data format when the second connection mode is in effect.

18. The method according to claim 16, wherein at least either one of frame rate and image size of a transferred image differs between the first and second configurations.

19. The method according to claim 13, wherein among the mounted interfaces of the first configuration and the second configuration there is at least one identical class for transferring data, said identical class has a function for transferring two types of data, and processing relating to transfer of at least one type of data of the two types of data is changed in accordance with the connection mode.

20. The method according to claim 19, wherein the processing relating to the data transfer is data transfer of a still image in a video class interface.

21. A carrier which carries a computer program comprising processor implementable instructions for causing a computer to perform a method as claimed in any one of claims 11 to 20.
